# EUROPÄISCHE PATENTSCHRIFT

(11) **EP 3 168 580 B1**
(45) Veröffentlichungstag und Bekanntmachung des Hinweises auf die Patenterteilung: **08.09.2021**
(21) Anmeldenummer: 15194471.7
(22) Anmeldetag: 13.11.2015
(51) Int. Cl.: G01F 23/284, G01S 7/02, G01S 7/03, G01S 13/88, H01Q 1/22, H01Q 13/02, H01Q 19/08

(54) **HORNANTENNE**
HORN ANTENNA
ANTENNE À CORNET

(43) Veröffentlichungstag der Anmeldung: 17.05.2017
(73) Patentinhaber: VEGA Grieshaber KG, 77709 Wolfach (DE)
(72) Erfinder: Falk, Johannes, 78112 St. Georgen (DE); Kienzle, Klaus, 77736 Zell am Harmersbach (DE); Lenk, Fritz, 77761 Schiltach (DE); Schultheiß, Daniel, 78132 Hornberg (DE); Baur, Roland, 78126 Königsfeld (DE)
(74) Vertreter: Patentanwälte Bauer Vorberg Kayser

(56) Entgegenhaltungen:
- DE-A1-102013 113 642
- DE-T2- 60 214 755
- US-A1- 2012 206 312
- US-A1- 2013 099 989

## Beschreibung

Die vorliegende Erfindung betrifft eine Hornantenne für ein Radarmessgerät, insbesondere ein Radar-Füllstandmessgerät gemäß dem Oberbegriff des Patentanspruchs 1.

Aus dem Stand der Technik sind Radarmessgeräte, beispielsweise Radar-Füllstandmessgeräte bekannt, die nach dem Laufzeitprinzip einen Füllstand eines in einem Behälter befindlichen Füllguts, insbesondere von Flüssigkeiten und Schüttgütern detektieren. Solche Radar-Füllstandmessgeräte sind beispielsweise mit Hornantennen ausgestattet, über die ein eingekoppeltes HF-Signal in Richtung des Füllgutes abgestrahlt und von diesem reflektiert wird. In einem kombinierten Sende- und Empfangssystem des Radar-Füllstandmessgerätes werden die vom Füllgut reflektierten Mikrowellenimpulse erfasst und durch Messung der Laufzeit dieser Pulse ein Abstand von dem Füllstandmessgerät zu dem Füllgut ermittelt.

Hornantennen haben grundsätzlich einen einfachen und robusten Aufbau, einen sehr guten Wirkungsgrad und sind kostengünstig herzustellen. Sobald allerdings eine Innenseite des Antennenhorns verschmutzt wird, wirkt sich dies negativ auf die Leistungsfähigkeit der Hornantenne aus.

Aus dem Stand der Technik ist es daher bekannt, die Antennen solcher Füllstandmessgeräte gegen Verschmutzung und/oder Korrosion aufgrund einer aggressiven Messumgebung zu schützen. Dies wird beispielsweise dadurch erreicht, dass die Antennen mit einem Radom vorderseitig abgedeckt oder das Horn mit einem Medium, z. B. Kunststoff gefüllt ist.

Die Abdeckung der Hornantenne mit einem Radom kann zwar Verschmutzungen und aggressive Medien aus dem Antennenhorn fernhalten, solche Hornantennen sind aber nach wie vor nicht zum Einsatz in Über- oder Unterdruckumgebungen geeignet.

Im Stand der Technik existieren daher auch Hornantennen, bei denen das Antennenhorn vollständig mit einem festen Medium, z. B. Kunststoff gefüllt ist. Bei diesen gefüllten Hornantennen wird es jedoch als nachteilig empfunden, dass die zur Füllung verwendeten Kunststoffe häufig unzureichende dielektrische Eigenschaften aufweisen und zudem nicht ausreichend geeignet sind, aggressiven Messumgebungen hinreichend zu widerstehen oder in hygienekritischen Anwendungen, bei denen Reinigungsvorgänge mit hohen Temperaturen vorgesehen sind, eingesetzt zu werden.

Stand der Technik ist beispielsweise offenbart in der US 2013/099989 A1, DE 10 2013 113642 A1, US 2012/206312 A1 und der DE 602 14 755 T2.

Es ist die Aufgabe der vorliegenden Erfindung eine Hornantenne für ein Radarmessgerät, insbesondere ein Radar-FüllstandMessgerät, derart weiterzubilden, dass sie die aus dem Stand der Technik bekannten Nachteile nicht mehr aufweist.

Diese Aufgabe wird gelöst durch eine Hornantenne für ein Radarmessgerät, insbesondere ein Radar-Füllstandmessgerät mit den Merkmalen des Patentanspruchs 1 sowie ein Radar-FüllstandMessgerät mit einer solchen Hornantenne gemäß Patentanspruch 15.

Vorteilhafte Weiterbildungen sind Gegenstand abhängiger Patentansprüche.

Eine erfindungsgemäße Hornantenne für ein Radarmessgerät, insbesondere ein Radar-Füllstandmessgerät mit einem in vorderseitiger Richtung strahlenden Antennenhorn, einer rückseitigen Speiseeinrichtung und einer Füllung, die das Antennenhorn wenigstens teilweise ausfüllt und vorderseitig verschließt zeichnet sich dadurch aus, dass die Füllung wenigstens einen ersten Abschnitt aus einem ersten Material aufweist, der einen Hohlraum des Antennenhorns in einer Hauptabstrahlrichtung vorderseitig abschließt, und einen zweiten Abschnitt aus einem zweiten Material aufweist, der innerhalb des abgeschlossenen Hohlraums angeordnet ist.

Durch eine derartige Ausgestaltung der Hornantenne mit einer wenigstens zwei Abschnitte umfassenden Füllung kann erreicht werden, dass der erste Abschnitt, der das Antennenhorn vorderseitig, d. h. in Hauptabstrahlrichtung, verschließt optimal auf die von außen auf die Antenne einwirkenden Umgebungsbedingungen angepasst sein kann, während der wenigstens eine zweite Abschnitt diese Randbedingungen nicht erfüllen muss.

Vorteilhafterweise ist das erste Material hinsichtlich seiner thermischen, mechanischen und/oder chemischen Eigenschaften optimiert. Auf diese Weise wird erreicht, dass beispielsweise eine hohe Über- und/oder Unterdruckfähigkeit, thermisch optimierte Eigenschaften und/oder eine erhöhte chemische Widerstandsfähigkeit gegen aggressive Medien zur Verfügung steht. Ferner können die mechanischen Eigenschaften auch einen thermischen Ausdehnungskoeffizienten, der beispielsweise an das Material der Hornantenne angepasst sein kann, mit umfassen. Auf diese Weise kann erreicht werden, dass sich das Antennenhorn und der erste zur Abdeckung und gegebenenfalls auch Abdichtung verwendete Abschnitt in gleichem Maße thermisch ausdehnen und zusammenziehen kann, so dass die angestrebte Abdeckungs- und/oder Dichtwirkung durch thermische Einflüsse nicht gefährdet wird.

Ein geringer thermischer Ausdehnungskoeffizient des ersten Materials hat außerdem den Vorteil, dass für eine Abdichtung zwischen dem ersten Abschnitt und dem Kragen dadurch Dichtelemente geringerer Abmessung, beispielsweise O-Ringe mit einer kleineren Schnurstärke verwendet werden können, was zu verbesserten Hochfrequenzeigenschaften der Anordnung führt.

Eine optimale Kombination wird erreicht, wenn das zweite Material hinsichtlich seiner dielektrischen Eigenschaften insbesondere im Hinblick auf eine Dämpfung im Hochfrequenzbereich, insbesondere bei Frequenzen über 5 GHz optimiert ist. Auf diese Weise kann eine Materialkombination erreicht werden, die sowohl mechanisch und/oder chemisch als auch dielektrisch sehr gute Eigenschaften besitzt.

Der erste Abschnitt kann dabei in Hauptabstrahlrichtung eine freie Fläche mit konvexer Formgebung aufweisen und damit beispielsweise als dielektrische Linse zur Strahlformung der Hornantenne ausgebildet sein. Eine konvexe Formgebung umfasst dabei insbesondere linsenförmig oder kegelförmig ausgestaltete Oberflächen, die besonders einfache Geometrien, die auch einfach zu reinigen sind, darstellen.

Zur Erhöhung einer mechanischen Stabilität weist das Antennenhorn erfindungsgemäß vorderseitig zusätzlich einen umlaufenden, sich im Wesentlichen senkrecht zur Hauptabstrahlrichtung erstreckenden Auflagerand auf. An dem Auflagerand ist ferner ein sich im Wesentlichen in Hauptabstrahlrichtung erstreckender Kragen angeordnet sein, wobei das Antennenhorn, der Auflagerand und der Kragen bevorzugt einstückig ausgebildet sind. Hinsichtlich einer Über- und/oder Unterdruckstabilität der vorliegenden Hornantenne kann es vorteilhaft sein, wenn sich der erste Abschnitt der Füllung an dem Auflagerand abstützt und damit eine erhöhte Druckaufnahmefähigkeit in Axialrichtung aufweist. Der erste Abschnitt kann sich dabei beispielsweise ausgehend von dem Auflagerand in Hauptabstrahlrichtung erstrecken und rückseitig an selbigem abgestützt sein.

Vorteilhafterweise füllt die Füllung das Antennenhorn in Radialrichtung, d. h. senkrecht zur Hauptabstrahlrichtung, vollständig aus. Erfindungsgemäß füllt dabei der erste Abschnitt einen durch den Kragen in Radialrichtung begrenzten Raum vollständig aus und wenigstens eine umlaufende Dichtung, beispielsweise ein O-Ring, ist zwischen dem ersten Abschnitt und dem Kragen angeordnet. Innerhalb des Antennenhorns ist eine Ausdehnung der Füllung in Radialrichtung so gewählt, dass thermisch induzierte Ausdehnungen der Füllung möglich sind. Ferner wird durch einen Luftspalt zwischen der Füllung und der Innenseite des Antennenhorns der Entstehung höherer Ausbreitungsmoden entgegengewirkt, was HF-technisch vorteilhaft ist.

In einer bevorzugten Ausgestaltungsform grenzen der erste Abschnitt und der zweite Abschnitt unmittelbar aneinander und weisen eine sich im Wesentlichen senkrecht zur Hauptabstrahlrichtung erstreckende Grenzfläche auf, die beispielsweise stufenförmig, konvex, kegelförmig oder linsenförmig ausgebildet ist. Eine stufenförmige Ausgestaltung kann insbesondere eine Mehrzahl von Stufen unterschiedlicher Höhen aufweisen, sodass beispielsweise eine Annäherung an eine linsenförmige Ausgestaltung erreicht werden kann.

Durch eine konvexe Ausgestaltung der Grenzfläche wird eine selbstzentrierende Anordnung geschaffen, die beispielsweise durch das Vorsehen einer Stufe eine besonders exakte Ausrichtung der beiden Abschnitte zueinander erlaubt.

Durch eine stufenförmige Ausgestaltung der Grenzfläche wird erreicht, dass die freie Fläche des ersten Abschnitts eine größere Krümmung oder im Falle einer kegelförmigen Ausgestaltung der freien Fläche einen geringeren Winkel an der Spitze aufweist, wodurch sich ein verbessertes Abtropfverhalten bei Betauung der Antenne mit Flüssigkeiten ergibt. Auf diese Weise wird eine durch die Betauung ansonsten verursachte Defokussierung und Reduzierung der Reflexionsdämpfung und ein hieraus resultierendes stärkeres Antennenklingeln, was insgesamt zu Leistungseinbußen der Antenne führt, reduziert.

Durch eine geschickte Auswahl der für die Füllung verwendeten Kunststoffe und eine entsprechende Ausgestaltung der Grenzfläche kann die Wölbung der freien Oberfläche verstärkt und damit das Abtropfverhalten verbessert werden. Sobald die zweite Füllung in die erste Füllung hineinragt, tritt dieser positive Effekt auf. Besonders einfache Ausgestaltungen sind z. B. eine stufenförmige, kegelförmige oder linsenförmige Ausgestaltung der zweiten Füllung sowie eine daran angepasste Kontur der ersten Füllung.

Ferner können der erste Abschnitt und der zweite Abschnitt kraftschlüssig miteinander verbunden sein, beispielsweise kann die Grenzfläche ein innenliegendes oder auch außenliegendes Gewinde oder einen Hinterschnitt aufweisen, so dass der erste Abschnitt und der zweite Abschnitt vor einer Verbindung mit der Hornantenne, d. h. insbesondere vor einem Einsetzen in das Antennenhorn bereits fest miteinander verbunden sein können.

In einer besonders bevorzugten Ausgestaltungsform sind das erste Material und das zweite Material sowie ein Verlauf der Grenzfläche derart aufeinander abgestimmt, dass die freie Oberfläche des ersten Abschnitts ein verbessertes Abtropfverhalten aufweist.

Eine hinsichtlich Fokussierung und Abtropfverhalten optimierte Ausgestaltung wird erreicht, wenn sowohl die Grenzfläche als auch die freie Oberfläche kegelförmig ausgestaltet sind. Als Material kann hierbei vorteilhafterweise Poyletheretherketon (PEEK) als erste Füllung und Polytetrafluorethylen (PTFE) als zweite Füllung eingesetzt werden.

Erfindungsgemäß ist außerdem ein Radar-Füllstandmessgerät, einer Hornantenne mit einem in vorderseitige Richtung strahlenden Antennenhorn, einer rückseitigen Speiseeinrichtung und einer Füllung, die das Antennenhorn wenigstens teilweise ausfüllt und vorderseitig verschließt, wobei die Füllung wenigstens einen ersten Abschnitt aus einem ersten Material aufweist, der einen Hohlraum des Antennenhorns in einer Hauptabstrahlrichtung vorderseitig abschließt, und einen zweiten Abschnitt aus einem zweiten Material aufweist, der innerhalb des abgeschlossenen Hohlraums angeordnet ist.

Die vorliegende Erfindung wird nachfolgend anhand von Ausführungsbeispielen unter Bezugnahme auf die beigefügten Figuren eingehend erläutert.

Es zeigen:
- Figur 1: ein erstes Ausführungsbeispiel einer Hornantenne,
- Figur 2: ein zweites Ausführungsbeispiel einer Hornantenne,
- Figur 3: ein drittes Ausführungsbeispiel einer Hornantenne,
- Figur 4: ein viertes Ausführungsbeispiel einer Hornantenne

- Figur 5: ein fünftes Ausführungsbeispiel einer Hornantenne,
- Figur 6: ein sechstes Ausführungsbeispiel einer Hornantenne,
- Figur 7: ein siebtes Ausführungsbeispiel einer Hornantenne,
- Figur 8: ein achtes Ausführungsbeispiel einer Hornantenne,
- Figur 9: eine Ausschnittsvergrößerung aus Figur 8 und
- Figur 10: eine zweite Ausschnittsvergrößerung aus Figur 8.

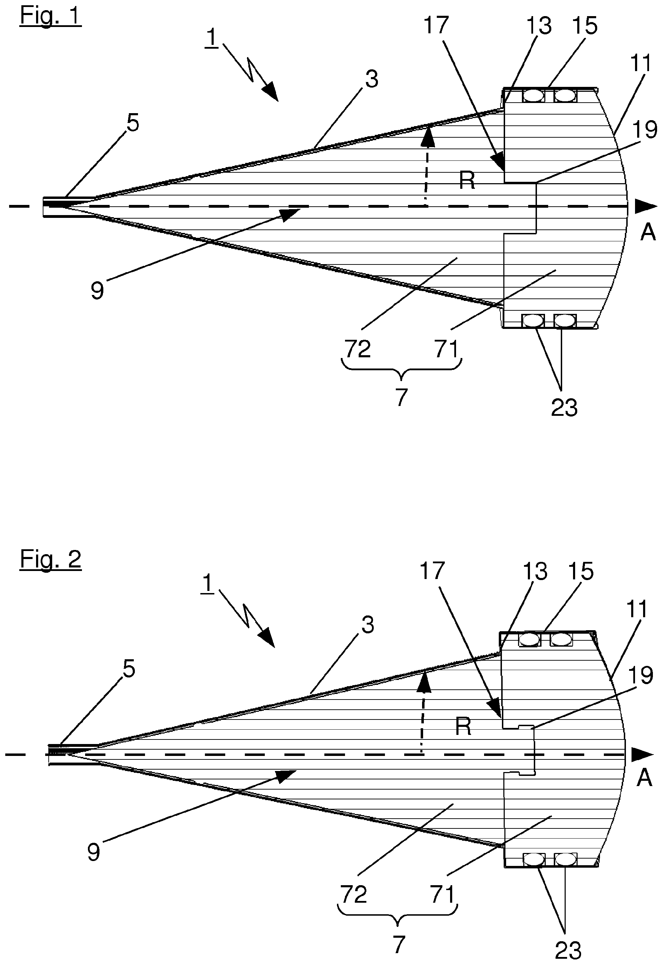

Figur 1 zeigt ein erstes Ausführungsbeispiel einer Hornantenne 1 gemäß der vorliegenden Anmeldung. Die Hornantenne 1 weist ein im Wesentlichen trichterförmig ausgebildetes Antennenhorn 3, an dem rückseitig eine Speiseeinrichtung 5 angeordnet ist, auf. Die Speiseeinrichtung 5 kann beispielsweise ein mit dem Antennenhorn 3 verbundener Hohlleiter oder ein am Ende des Antennenhorns 3 angeordneter Flächenstrahler, beispielsweise ein sogenanntes Patchelement sein. An dem Antennenhorn 3 ist in vorderseitiger Richtung, d. h. an einer in Hauptabstrahlrichtung A dem der Speiseeinrichtung 5 gegenüberliegenden Ende, ein sich in Radialrichtung R, d. h. im Wesentlichen senkrecht zur Hauptabstrahlrichtung A erstreckender, umlaufender Auflagerand 13 angeformt, der sich nach einem radial verlaufenden Abschnitt als ein in Hauptabstrahlrichtung A verlaufender, umlaufenden Kragen 15 fortsetzt. Im vorliegenden Ausführungsbeispiel sind das Antennenhorn 3, der umlaufende Auflagerand 13 sowie der Kragen 15 einstückig aus einem metallischen Werkstoff ausgebildet.

Die Hornantenne 1 ist mit einer Füllung 7, die im vorliegenden Ausführungsbeispiel aus einem ersten Abschnitt 71 und einem zweiten Abschnitt 72 besteht, ausgefüllt. Der erste Abschnitt 71 schließt die Hornantenne 1 in Hauptabstrahlrichtung A vorderseitig ab und stützt sich rückseitig an dem umlaufenden Auflagerand 13 ab. Der erste Abschnitt 71 ist dabei so ausgebildet, dass er einen umlaufend durch den Kragen 15 begrenzten Raum in Radialrichtung R annähernd vollständig ausfüllt, wobei zwischen dem ersten Abschnitt 71 und dem umlaufenden Kragen 15 eine umlaufende Abdichtung vorgesehen ist. Der erste Abschnitt 71 weist dafür im vorliegenden Ausführungsbeispiel zwei in Umfangsrichtung verlaufende Nuten auf, in denen Dichtelemente 23, die vorliegend als O-Ringe ausgebildet sind, angeordnet sind. Die Dichtelemente 23 dichten damit den ersten Abschnitt 71 zu dem Kragen 15 hin ab, so dass ein Umgebungsmedium nicht in den Innenraum der Hornantenne 1 eindringen kann.

Der erste Abschnitt 71 ist im vorliegenden Ausführungsbeispiel mit einer in Hauptabstrahlrichtung A vorne liegenden freien Fläche 11 mit konvexer Oberflächenform ausgebildet. Bei dem in Figur 1 dargestellten Ausführungsbeispiel weist die freie Fläche 11 eine linsenförmige Ausgestaltung auf . Es sind sphärische und asphärische Ausgestaltungen, beispielsweise mit parabelförmigem Verlauf oder kegelförmige Ausgestaltungen der freien Fläche 11 denkbar.

Rückseitig des ersten Abschnitts 71 ist im vorliegenden Ausführungsbeispiel ein zweiter Abschnitt 72 der Füllung 7 aus einem anderen Material angeordnet.

Der erste Abschnitt 71 ist im vorliegenden Ausführungsbeispiel aus Poyletheretherketon (PEEK) einem Hochleistungskunststoff mit hoher mechanischer, thermischer und chemischer Stabilität ausgebildet. Auf diese Weise kann die vorliegende Hornantenne in Über- und Unterdruck beaufschlagten Umgebungen mit chemisch aggressiven Medien und hohen Temperaturschwankungen eingesetzt werden.

Als weitere Materialien für den ersten Abschnitt kommen beispielsweise Keramik- Polyvinylideenfluorid (PVDF) oder Polyphenylensulfid (PPS) in Frage. In Frage kommen ferner weitere Hochleistungskunststoffe sowie faserverstärkte Kunststoffe, die besonders hohe mechanische Belastungen aufnehmen können.

Rückseitig zu dem ersten Abschnitt 71 ist im vorliegenden Ausführungsbeispiel unmittelbar der zweite Abschnitt 72 aus einem zweiten Material, vorliegend Polytetrafluorethylen (PTFE) ausgebildet. PTFE hat im Vergleich zu PEEK deutliche bessere HF-Eigenschaften und kann daher vorteilhaft in einem Hohlraum 9 des Antennenhorns 3 eingesetzt werden.

Der zweite Abschnitt kann beispielsweise aus Polytetrafluorethylen (PTFE), Polypropylen (PP) oder Polyethylen (PE) oder anderen Kunststoffen mit geeigneten Hochfrequenzeigenschaften gefertigt sein.

Im vorliegenden Ausführungsbeispiel ist die Grenzfläche 17 zwischen dem ersten Abschnitt 71 und dem zweiten Abschnitt 72 so ausgebildet, dass der zweite Abschnitt 72 einen sich in Hauptabstrahlrichtung A erstreckenden Fortsatz mit einem darauf aufgebrachten Außengewinde 19 und der erste Abschnitt eine entsprechende Ausnehmung mit einem Innengewinde aufweist. Der erste Abschnitt 71 und der zweite Abschnitt 72 der Füllung 7 können somit kraftschlüssig und formschlüssig miteinander verbunden und damit bereits außerhalb der Hornantenne 1 vormontiert werden. Der zweite Abschnitt 72 füllt den Hohlraum 9 des Antennenhorns vollständig aus und reicht bis zu einem Ansatz des als Speiseeinrichtung 5 an der Hornantenne 1 angeordneten Hohlleiters.

Figur 2 zeigt ein zweites Ausführungsbeispiel einer Hornantenne 1 gemäß der vorliegenden Anmeldung. In dem Ausführungsbeispiel gemäß Figur 2 sind der erste Abschnitt 71 und der zweite Abschnitt 72 durch eine über einen Hinterschnitt 21 in dem ersten Abschnitt und eine korrespondierend dazu an dem zweiten Abschnitt 72 ausgebildete Anformung gebildete Schnappgeometrie miteinander verbunden. Durch eine derartige Ausgestaltung kann in einfacher Weise eine kraft- und formschlüssige Verbindung zwischen dem ersten Abschnitt 71 und dem zweiten Abschnitt 72 sowie eine selbstzentrierende Anordnung der beiden Abschnitte 71, 72 zueinander erreicht werden.

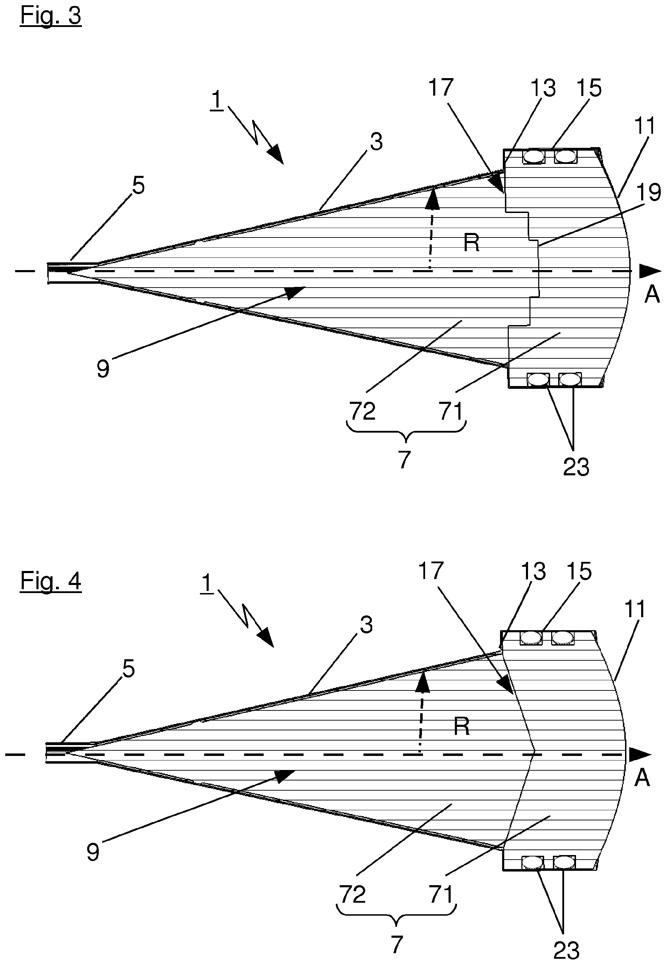

In Figur 3 ist ein drittes Ausführungsbeispiel einer Hornantenne 1 gemäß der vorliegenden Anmeldung dargestellt. Das Ausführungsbeispiel gemäß Figur 3 unterscheidet sich von den beiden vorhergehenden Ausführungsbeispielen lediglich in der Ausgestaltung der Grenzfläche 17 zwischen dem ersten Abschnitt 71 und dem zweiten Abschnitt 72 der Füllung 7. Die Grenzfläche 17 ist in dem in Figur 3 gezeigten Ausführungsbeispiel stufenförmig ausgebildet, wodurch eine Verstärkung der Wölbung der freien Fläche 11 des ersten Abschnitts 71 erreicht wird. Die Hornantenne 1 weist damit ein verbessertes Abtropfverhalten bei Betauung mit Flüssigkeiten auf, was eine deutliche Reduktion einer durch die Betauung hervorgerufenen Defokussierung der Antenne und Reduzierung der Reflexionsdämpfung und einem daraus resultierenden Antennenklingeln bewirkt. Insgesamt kann auf diese Weise eine deutliche Verbesserung der Leistung der Antenne erreicht werden.

In Figur 4 ist in einem vierten Ausführungsbeispiel eine Hornantenne 1 eine alternative Ausgestaltungsform mit einer kegelförmig ausgestalteten Grenzfläche 17 zwischen dem ersten Abschnitt 71 und dem zweiten Abschnitt 72 gezeigt. Eine derartige Ausgestaltung bietet ebenfalls eine selbstzentrierende Anordnung, wobei durch die schräg zur Hauptabstrahlrichtung A stehende Grenzfläche 19 die durch die unterschiedlichen Dielektrizitätskonstanten der einzelnen Materialien entstehenden Reflexionen nicht direkt zur Elektronik des Empfängers zurückreflektiert werden, sondern durch die schräge Reflexion im Empfänger stark abgeschwächt ankommen. Daraus resultiert ein verringertes Klingeln der Antenne.

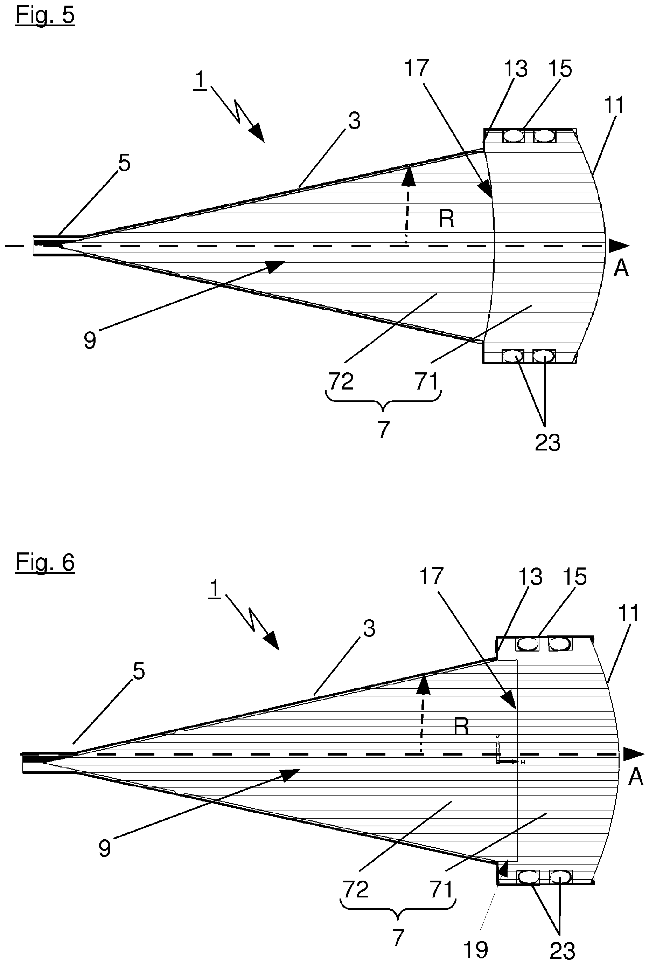

In Figur 5 ist ein fünftes Ausführungsbeispiel einer Hornantenne 1 gezeigt, wobei sowohl die freie Fläche 11 als auch die Grenzfläche 17 linsenförmig ausgestaltet ist. In Figur 5 wird eine Variante gezeigt, bei der die Wölbung der zweiten Füllung 72 eine Teilfokussierung vornimmt und die Wölbung der ersten Füllung 71 dabei verstärkt. Die Wölbung der zweiten Füllung 72 ist so abgestimmt, dass diese den Rest der Fokussierung übernimmt. Die Vorteile sind hier eine sehr genaue Fokussierung und somit ein maximaler Gewinn, geringere Nebenkeulen der Hornantenne 1 sowie durch die verstärkte Wölbung ein verbessertes Abtropfverhalten.

Figur 6 zeigt ein sechstes Ausführungsbeispiel einer Hornantenne 1, wobei die freie Fläche 11 linsenförmig und die Grenzfläche 17 stufenförmig ausgestaltet ist. Die Grenzfläche 17 weist in dem in Figur 6 dargestellten Ausführungsbeispiel eine Kontur mit einer Stufe auf, die in Hauptabstrahlrichtung A über den Auflagerand 13 hinausragt, mit einem Gewinde 19 versehen ist. Der erste Abschnitt 71 und der zweite Abschnitt 72 der Füllung 7 können damit über das Gewinde 19 form- und kraftschlüssig miteinander verbunden und zueinander ausgerichtet werden.

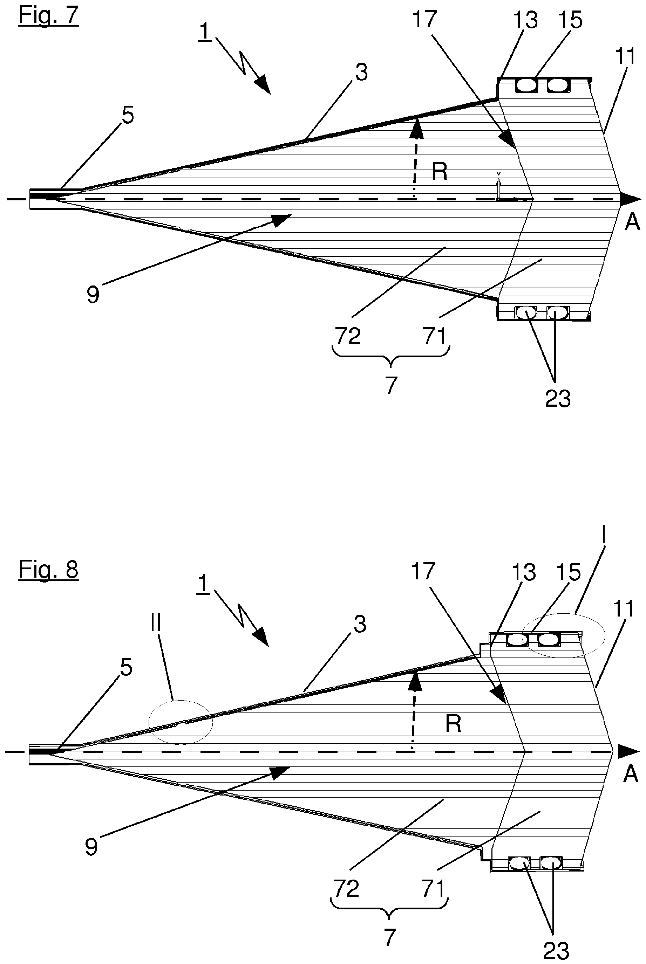

In Figur 7 ist ein siebtes Ausführungsbeispiel einer Hornantenne 1 gezeigt, wobei sowohl die freie Fläche 11 als auch die Grenzfläche 17 kegelförmig ausgestaltet ist. Die in Figur 7 dargestellte Ausführungsform ist besonders hinsichtlich ihres Abtropfverhaltens an der freien Fläche 11 optimiert. Durch die kegelförmige Ausgestaltung der freien Fläche 11 wird hier ein definierter Punkt für ein Abtropfen etwaig sich an der freien Oberfläche 11 niederschlagenden Kondensats definiert, wobei durch die kegelförmige Ausgestaltung der Grenzfläche 17 eine Verkleinerung des Winkels an der Kegelspitze erreicht wird, so dass das Kondensat zu diesem Punkt auch ein besseres Ablaufverhalten aufweist.

In Figur 8 ist ein achtes Ausführungsbeispiel einer Hornantenne 1 gezeigt, wobei die freie Fläche 11 und die Grenzfläche 17 wie bei dem Ausführungsbeispiel in Figur 7 beide kegelförmig ausgestaltet sind. Das Ausführungsbeispiel der Figur 8 unterscheidet sich von dem der Figur 7 dadurch, dass der umlaufende Auflagerand 13 im Ausführungsbeispiel der Figur 8 stufenförmig ausgebildet ist, so dass der zweite Abschnitt 72 der Füllung 7 mit einem vorderseitig an der zweiten Füllung 72 angeformten und sich stegförmig nach außen erstreckenden Auflagesteg auf einem ersten radialen Abschnitt des Auflagerands 13 aufliegt. Der erste Abschnitt 71 der Füllung 7 liegt auf einem zweiten radialen Abschnitt des Auflagerands 13 auf, der sich an den ersten radialen Abschnitt nach einem in Axialrichtung verlaufenden Stufenabschnitt anschließt. Der Auflagesteg des zweiten Abschnitts 72 ist damit zwischen den ersten radialen Abschnitt des Auflagerands 13 und dem ersten Abschnitt 71 der Füllung 7 eingeklemmt und dadurch in Axialrichtung fixiert.

Es ist eine Ausschnittsvergrößerung des in Hauptabstrahlrichtung A vorne liegenden Abschnitts der Hornantenne 1 im Bereich des Kragens 15 gezeigt. Diese vergrößerte Darstellung ist besonders deutlich zu erkennen, dass die als O-Ringe ausgestalteten Dichtelemente 23 in einer Nut des ersten Abschnitts 71 liegen und eine Abdichtung zu dem Kragen 15 hin gewährleisten. Es sei an dieser Stelle angemerkt, dass eine solche Abdichtung nicht zwingend notwendig ist und abhängig von einem vorherrschenden Druck beim Einsatz der Hornantenne 1 sowie der Art der auf die Hornantenne 1 einwirkenden Medien abhängig gemacht werden kann.

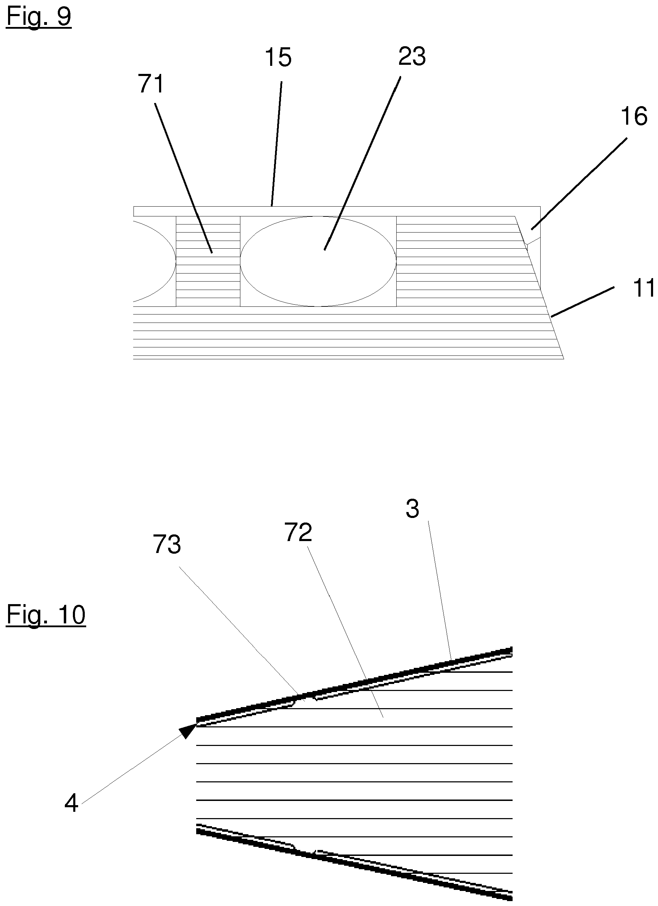

In der in Figur 9 gezeigten Darstellung ist außerdem deutlich ersichtlich, dass an dem Kragen 15 in Hauptabstrahlrichtung A vorderseitig eine in Radialrichtung R nach innen springende Nase 16 einstückig angeformt ist. Durch die Nase 16 wird eine Klemmwirkung auf den ersten Abschnitt 71 der Füllung 7 ausgeübt und dieser an einer Bewegung aus dem Antennenhorn 3 heraus gehindert. Die Füllung 7 bestehend aus dem ersten Abschnitt 71 und dem zweiten Abschnitt 72 ist damit in dem Antennenhorn 3 fixiert und kann auf einfache Weise, beispielsweise über eine Schnappverbindung, alternativ über eine Bajonettverbindung oder dergleichen, in dem Antennenhorn 3 befestigt sein.

Es sei an dieser Stelle angemerkt, dass die Nase 16 entweder als umlaufender Steg oder als über den Umfang verteilte, bevorzugt in regelmäßigen Abständen angeordnete einzelne Nasen ausgebildet sein kann. Die Nasen 16 können einstückig mit dem Kragen 15 ausgebildet oder mit diesem lösbar oder unlösbar verbunden sein. Beispielsweise könnte ein umlaufender Schnappring vorderseitig auf den Kragen 15 aufgesteckt und die Füllung damit in dem Antennenhorn 7 fixiert werden.

Figur 9 zeigt den in Figur 8 mit I gekennzeichneten Abschnitt.

In Figur 10 ist der in Figur 8 mit II gekennzeichnete Ausschnitt vergrößert dargestellt, wobei in dieser Darstellung besonders deutlich zu erkennen ist, dass zwischen dem Antennenhorn 3 und der Füllung 7, vorliegend dem zweiten Abschnitt 72 der Füllung 7 ein Luftspalt 4 verbleibt. Dieser Luftspalt ist aus hochfrequenztechnischer Sicht vorteilhaft und ermöglicht außerdem, dass thermisch induzierte Ausdehnungen der Füllung 7 in Radialrichtung möglich sind. In Figur 10 ist eine besonders einfache Ausgestaltung zur Erreichung dieses Luftspalts 4 gezeigt, bei der durch außenseitig an den zweiten Abschnitt 72 der Füllung 7 vorgesehene Anformungen 73 ein definierter Abstand zwischen der Füllung 7 und dem Antennenhorn 3 eingestellt wird. Diese Anformung stellt auch sicher, dass die Füllung 72 immer zentriert im Antennenhorn 3 montiert ist.

Alternativ zu Anformungen 73 könnte beispielsweise auch ein O-Ring oder dergleichen zwischen dem Antennenhorn 3 und der Füllung 7 zur Einstellung des Abstands vorgesehen sein.

Es sei angemerkt, dass sämtliche zuvor beschriebene Ausführungsbeispiele anstelle einer freien Oberfläche mit linsenförmiger Oberfläche auch beispielsweise mit kegelförmiger Oberfläche ausgebildet sein können und auch eine Kombination einzelner oder mehrerer Merkmale der einzelnen Ausführungsbeispiele untereinander möglich ist.

### Bezugszeichenliste

- 1: Hornantenne
- 3: Antennenhorn
- 4: Luftspalt
- 5: Speiseeinrichtung
- 7: Füllung
- 9: Hohlraum
- 11: freie Fläche
- 13: Auflagerand
- 15: Kragen
- 16: Klemmanordnung
- 17: Grenzfläche
- 19: Gewinde
- 21: Hinterschnitt
- 23: Dichtelemente, O-Ring
- 71: erster Abschnitt
- 72: zweiter Abschnitt
- 73: Anformung
- A: Hauptabstrahlrichtung
- R: Radialrichtung

## Patentansprüche

1. Hornantenne (1) für ein Radarmessgerät, insbesondere ein Radar-Füllstandmessgerät, mit einem in vorderseitiger Richtung strahlenden Antennenhorn (3), einer rückseitigen Speiseeinrichtung (5) und einer Füllung (7), die die Hornantenne (1) wenigstens teilweise ausfüllt und vorderseitig verschließt,
**dadurch gekennzeichnet, dass**
die Füllung (7) wenigstens einen ersten Abschnitt (71) aus einem ersten Material aufweist, der einen Hohlraum (9) des Antennenhorns (3) in einer Hauptabstrahlrichtung (A) vorderseitig abschließt, und einen zweiten Abschnitt (72) aus einem zweiten Material aufweist, der innerhalb des abgeschlossenen Hohlraums (9) angeordnet ist, wobei das Antennenhorn (3) vorderseitig einen umlaufenden, sich im Wesentlichen senkrecht zur Hauptabstrahlrichtung (A) erstreckenden Auflagerand (13) aufweist und wobei das Antennenhorn (3) einen sich von dem Auflagerand (13) im Wesentlichen in Hauptabstrahlrichtung (A) erstreckenden Kragen (15) aufweist, wobei der erste Abschnitt (71) der Füllung (7) einen durch den Kragen (15) in Radialrichtung (R) begrenzten Raum vollständig ausfüllt und zwischen dem Kragen (15) und dem ersten Abschnitt (71) der Füllung (7) wenigstens ein umlaufendes Dichtelement (23) angeordnet ist.

2. Hornantenne (1) gemäß Anspruch 1,
**dadurch gekennzeichnet, dass** das erste Material hinsichtlich seiner mechanischen und/oder chemischen Eigenschaften und/oder Widerstandsfähigkeit, optimiert ist.

3. Hornantenne (1) gemäß einem der vorhergehenden Ansprüche, **dadurch gekennzeichnet, dass** das zweite Material hinsichtlich seiner dielektrischen Eigenschaften im Hochfrequenzbereich, insbesondere bei Frequenzen über 5 GHz, optimiert ist.

4. Hornantenne (1) gemäß einem der vorhergehenden Ansprüche,
**dadurch gekennzeichnet, dass** der erste Abschnitt (71) der Füllung (7) in Hauptabstrahlrichtung (A) eine freie Fläche (11) mit konvexer Formgebung aufweist.

5. Hornantenne (1) gemäß einem der vorhergehenden Ansprüche,
**dadurch gekennzeichnet, dass** der erste Abschnitt (71) der Füllung (7) linsenförmig oder kegelförmig ausgebildet ist.

6. Hornantenne (1) gemäß einem der vorhergehenden Ansprüche
**dadurch gekennzeichnet, dass** es sich bei dem zwischen dem Kragen (15) und dem ersten Abschnitt (71) der Füllung (7) angeordneten umlaufenden Dichtelement (23) um einen O-Ring handelt.

7. Hornantenne (1) gemäß einem der vorhergehenden Ansprüche
**dadurch gekennzeichnet, dass** an dem Kragen eine sich in Radialrichtung (R) nach innen erstreckende Klemmanordnung, insbesondere eine Mehrzahl von über den Umfang verteilten Klemmnasen oder ein umlaufender Klemmrand angeordnet ist.

8. Hornantenne (1) gemäß Anspruch 7,
**dadurch gekennzeichnet, dass** das Antennenhorn (3), der Auflagerand (13) und vorzugsweise der Kragen (15) und vorzugsweise die Klemmanordnung einstückig ausgebildet sind.

9. Hornantenne (1) gemäß einem der Ansprüche 7 oder 8,
**dadurch gekennzeichnet, dass** sich der erste Abschnitt (71) der Füllung (7) ausgehend von dem Auflagerand (13) in Hauptabstrahlrichtung (A) erstreckt und rückseitig an dem Auflagerand (13) abgestützt ist.

10. Hornantenne (1) gemäß einem der vorhergehenden Ansprüche,
**dadurch gekennzeichnet, dass** die Füllung (7) das Antennenhorn (3) senkrecht zur Hauptabstrahlrichtung in Radialrichtung (R) wenigstens abschnittsweis vollständig ausfüllt.

11. Hornantenne (1) gemäß einem der vorhergehenden Ansprüche,
**dadurch gekennzeichnet, dass**
der erste Abschnitt (71) der Füllung (7) und der zweite Abschnitt (72) der Füllung (7) unmittelbar aneinander grenzen und eine sich im Wesentlichen senkrecht zur Hauptabstrahlrichtung (A) erstreckende Grenzfläche (17) aufweisen, die einen im Wesentlichen stufenförmig, konvex, kegelförmig oder linsenförmig ausgebildeten Verlauf aufweist.

12. Hornantenne (1) gemäß Anspruch 1,
**dadurch gekennzeichnet, dass**
derersteAbschnitt (71) der Füllung (7) und der zweite Abschnitt (72) der Füllung (7) kraftschlüssig miteinander verbunden sind.

13. Hornantenne (1) gemäß Anspruch 12,
**dadurch gekennzeichnet, dass**
die Grenzfläche (17) ein Gewinde (19) oder einen Hinterschnitt (21) aufweist.

14. Hornantenne (1) gemäß einem der vorhergehenden Ansprüche,
**dadurch gekennzeichnet, dass**
das erste Material und das zweite Material sowie ein Verlauf der Grenzfläche (17) derart aufeinander abgestimmt sind, dass die freie Oberfläche des ersten Abschnitts (71) der Füllung (7) ein verbessertes Abtropfverhalten aufweist.

15. Radar-Füllstandmessgerät mit einer Elektronik zur Erzeugung und Auswertung hochfrequenter Signale, einer Speiseeinrichtung zur Speisung einer Hornantenne (1) mit den hochfrequenten Signalen,
**gekennzeichnet durch** eine Hornantenne (1) gemäß einem der vorhergehenden Ansprüche.

## Claims

1. A horn antenna (1) for a radar measuring device, in particular a radar filling level measuring device, comprising an antenna horn (3) emitting in the direction towards the front, a rear supplying device (5), and a filling (7) at least partially filling the horn antenna (1) and closing it at the front,
**characterized in that**
the filling (7) has at least one first section (71) consisting of a first material which seals a cavity (9) of the antenna horn (3) at the front in a main emission direction (A), and has a second section (72) consisting of a second material which is disposed within the sealed cavity (9), wherein the antenna horn (3) has at the front a peripherally extending supporting edge (13) that extends substantially perpendicularly to the main emission direction (A), and wherein the antenna horn (3) has a collar (15) extending from the supporting edge (13) substantially in the main emission direction (A), wherein the first section (71) of the filling (7) completely fills a space delimited by the collar (15) in the radial direction (R) and at least one peripherally extending sealing member (23) is disposed between the collar (15) and the first section (71) of the filling (7).

2. The horn antenna (1) according to claim 1,
**characterized in that**
the first material is optimized with respect to its mechanical and/or chemical properties and/or its resistance.

3. The horn antenna (1) according to any one of the preceding claims,
**characterized in that**
the second material is optimized with regard to its dielectric properties in the high-frequency range, particularly at frequencies above 5 GHz.

4. The horn antenna (1) according to any one of the preceding claims,
**characterized in that**
the first section (71) of the filling (7) has in the main emission direction (A) a free surface (11) with a convex shape.

5. The horn antenna (1) according to any one of the preceding claims,
**characterized in that**
the first section (71) of the filling (7) has a lenticular or conical configuration.

6. The horn antenna (1) according to any one of the preceding claims,
**characterized in that** the peripherally extending sealing member (23) disposed between the collar (15) and the first section (71) of the filling (7) is an O-ring.

7. The horn antenna (1) according to any one of the preceding claims,
**characterized in that** a clamping assembly extending inwardly in the radial direction (R), in particular a plurality of circumferentially distributed clamping lug or a peripherally extending clamping edge, is disposed on the collar.

8. The horn antenna (1) according to claim 7,
**characterized in that**
the antenna horn (3), the supporting edge (13), and preferably the collar (15) and preferably the clamping assembly are integrally formed.

9. The horn antenna (1) according to any one of the claims 7 or 8,
**characterized in that**
the first section (71) of the filling (7), starting from the supporting edge (13), extends in the main emission direction (A) and is supported at the rear by the supporting edge (13).

10. The horn antenna (1) according to any one of the preceding claims,
**characterized in that**
the filling (7) completely fills the antenna horn (3) perpendicularly to the main emission direction in the radial direction (R) at least in some sections.

11. The horn antenna (1) according to any one of the preceding claims,
**characterized in that**
the first section (71) of the filling (7) and the second section (72) of the filling (7) are directly adjacent to each other and have an interface (17), which extends substantially perpendicularly to the main emission direction (A) and has a profile that is configured in a substantially stepped, convex, conical or lenticular manner.

12. The horn antenna (1) according to claim 1,
**characterized in that**
the first section (71) of the filling (7) and the second portion (72) of the filling (7) are non-positively interconnected.

13. The horn antenna (1) according to claim 12,
**characterized in that**
the interface (17) has a threaded portion (19) or an undercut (21).

14. The horn antenna (1) according to any one of the preceding claims,
**characterized in that**
the first material and the second material and a profile of the interface (17) are coordinated in such a way that the free surface of the first section (71) of the filling (7) has an improved drip-off behavior.

15. A radar filling level measuring device with an electronic system for generating and evaluating high-frequency signals, a supplying device for supplying a horn antenna (1) with the high-frequency signals,
**characterized by** a horn antenna (1) according to any one of the preceding claims.

## Revendications

1. Antenne cornet (1) pour un appareil de mesure par radar, en particulier un appareil de mesure de niveau de remplissage par radar, comprenant un cornet d'antenne (3) rayonnant dans la direction avant, un dispositif d'alimentation arrière (5) et un remplissage (7) qui comble au moins en partie l'antenne cornet (1) et ferme celle-ci sur la face avant,
**caractérisée par le fait que** le remplissage (7) présente au moins une première section (71) en un premier matériau, qui ferme une cavité (9) du cornet d'antenne (3) dans une direction de rayonnement principale (A) sur la face avant, ainsi qu'une deuxième section (72) en un deuxième matériau qui est disposée à l'intérieur de la cavité (9) fermée, dans laquelle le cornet d'antenne (3) présente sur la face avant un bord de support (13) circonférentiel qui s'étend pour l'essentiel perpendiculairement à la direction de rayonnement principale (A) et dans laquelle le cornet d'antenne (3) présente une collerette (15) qui s'étend pour l'essentiel dans la direction de rayonnement principale (A) à partir du bord de support (13), dans laquelle ladite première section (71) du remplissage (7) comble complètement un espace délimité par la collerette (15) dans la direction radiale (R), et au moins un élément d'étanchéité circonférentiel (23) est disposé entre la collerette (15) et la première section (71) du remplissage (7).

2. Antenne cornet (1) selon la revendication 1, **caractérisée par le fait que** le premier matériau est optimisé en ce qui concerne ses propriétés mécaniques et / ou chimiques et / ou sa résistance.

3. Antenne cornet (1) selon l'une quelconque des revendications précédentes, **caractérisée par le fait que** le deuxième matériau est optimisé en ce qui concerne ses propriétés diélectriques dans la gamme des hautes fréquences, en particulier à des fréquences supérieures à 5 GHz.

4. Antenne cornet (1) selon l'une quelconque des revendications précédentes, **caractérisée par le fait que** la première section (71) du remplissage (7) dans la direction principale de rayonnement (A) présente une surface libre (11) conçue de manière convexe.

5. Antenne cornet (1) selon l'une quelconque des revendications précédentes, **caractérisée par le fait que** la première section (71) du remplissage (7) est conçue de façon lenticulaire ou conique.

6. Antenne cornet (1) selon l'une quelconque des revendications précédentes, **caractérisée par le fait que** dans le cas de l'élément d'étanchéité circonférentiel (23) qui est disposé entre la collerette (15) et la première section (71) du remplissage (7) il s'agit d'un joint torique.

7. Antenne cornet (1) selon l'une quelconque des revendications précédentes, **caractérisée par le fait qu'**un agencement de serrage qui s'étend vers l'intérieur dans la direction radiale (R), en particulier une pluralité de nez de serrage répartis sur la circonférence ou un bord de serrage circonférentiel est disposé(e) sur ladite collerette

8. Antenne cornet (1) selon la revendication 7, **caractérisée par le fait que** le cornet d'antenne (3), le bord de support (13) et de préférence la collerette (15) et de préférence l'agencement de serrage sont formés d'un seul tenant.

9. Antenne cornet (1) selon l'une quelconque des revendications 7 ou 8, **caractérisée par le fait que** la première section (71) du remplissage (7) s'étend dans la direction de rayonnement principale (A) à partir du bord de support (13) et est appuyée face arrière sur le bord de support (13).

10. Antenne cornet (1) selon l'une quelconque des revendications précédentes, **caractérisée par le fait que** le remplissage (7) comble, au moins par sections, complètement le cornet d'antenne (3) perpendiculairement à la direction de rayonnement principale dans la direction radiale (R).

11. Antenne cornet (1) selon l'une quelconque des revendications précédentes, **caractérisée par le fait que** la première section (71) du remplissage (7) et la deuxième section (72) du remplissage (7) sont directement contiguës l'une à l'autre et présentent une interface (17) qui s'étend pour l'essentiel perpendiculairement à la direction de rayonnement principale (A) et qui présente un tracé pour l'essentiel en gradins, convexe, conique ou en forme de lentille.

12. Antenne cornet (1) selon la revendication 1, **caractérisée par le fait que** la première section (71) du remplissage (7) et la deuxième section (72) du remplissage (7) sont reliées entre elles par liaison de force.

13. Antenne cornet (1) selon la revendication 12, **caractérisée par le fait que** l'interface (17) présente un filetage (19) ou une contre-dépouille (21).

14. Antenne cornet (1) selon l'une quelconque des revendications précédentes, **caractérisée par le fait que** le premier matériau et le deuxième matériau ainsi qu'un tracé de l'interface (17) sont adaptés l'un à l'autre de telle sorte que la surface libre de la première section (71) du remplissage (7) présente un comportement d'égouttage amélioré.

15. Appareil de mesure de niveau de remplissage par radar, comprenant une électronique pour générer et évaluer des signaux haute fréquence, un dispositif d'alimentation pour alimenter une antenne cornet (1) en lesdits signaux haute fréquence, **caractérisé par** une antenne cornet (1) selon l'une quelconque des revendications précédentes.
